(19) **Europäisches Patentamt European Patent Office Office européen des brevets**

(11) **EP 3 451 316 B1**

(12) **FASCICULE DE BREVET EUROPEEN**

(45) Date de publication et mention de la délivrance du brevet:
**13.04.2022 Bulletin 2022/15**

(21) Numéro de dépôt: **18191877.2**

(22) Date de dépôt: **31.08.2018**

(51) Classification Internationale des Brevets (IPC):
**G06F 7/72** $^{(2006.01)}$    **G09C 1/00** $^{(2006.01)}$
**H04L 9/30** $^{(2006.01)}$    **G06F 7/38** $^{(2006.01)}$

(52) Classification Coopérative des Brevets (CPC):
**G06F 7/72; G06F 7/38; G09C 1/00; H04L 9/3013; H04L 9/302;** H04L 2209/122

(54) **DISPOSITIF DE RÉDUCTION MODULAIRE**

VORRICHTUNG ZUR MODULAREN REDUZIERUNG

MODULAR REDUCTION DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.09.2017 FR 1758179**

(43) Date de publication de la demande:
**06.03.2019 Bulletin 2019/10**

(73) Titulaire: **Commissariat à l'énergie atomique et aux énergies alternatives 75015 Paris (FR)**

(72) Inventeur: **HISCOCK, Thomas 38000 Grenoble (FR)**

(74) Mandataire: **Brevalex 56, Boulevard de l'Embouchure B.P. 27519 31075 Toulouse Cedex 2 (FR)**

(56) Documents cités:
**FR-A1- 2 862 454    US-A1- 2007 297 601**

• **Vinodh Gopal ET AL: "Fast and Constant-Time Implementation of Modular Exponentiation", 28th International Symposium on Reliable Distributed Systems, 1 janvier 2009 (2009-01-01), XP055250267, Extrait de l'Internet: URL:https://www.cse.buffalo.edu/srds2009/escs2009_submission_Gopal.pdf [extrait le 2016-02-16]**
• **Miroslav Knezevi ET AL: "Speeding Up Barrett and Montgomery Modular Multiplications", , 1 January 2009 (2009-01-01), XP055474329, Retrieved from the Internet: URL:https://pdfs.semanticscholar.org/c751/a321dd430ebbcfb4dcce1f86f88256e0af5a.pdf [retrieved on 2018-05-11]**

**Description**

**DOMAINE TECHNIQUE**

La présente invention concerne les dispositifs de réduction modulaire. Elle trouve notamment application dans le domaine de la cryptographie, en particulier dans les infrastructures à clés asymétriques tels que RSA ou El Gamal, et les chiffrements basés sur courbes elliptiques ou encore sur les réseaux euclidiens

**ÉTAT DE LA TECHNIQUE ANTÉRIEURE**

La réduction modulaire d'un entier $x \in \mathbf{Z}$ par un diviseur $q \in \mathbf{Z}^*$, encore appelé modulo, est définie comme le reste de la division euclidienne de $x$ par ce modulo. La plupart des méthodes de chiffrement et de codage de correction d'erreurs font directement ou indirectement appel à des opérations arithmétiques sur un anneau fini $\mathbf{Z_q = Z/gZ}$ où q, entier positif non nul, est le cardinal de l'anneau, cet anneau fini étant un corps fini si q est un nombre premier. Les opérations arithmétiques sur les anneaux ou corps finis nécessitent des opérations de réduction modulaire. Or, les méthodes naïves de division euclidienne s'avèrent inappropriées pour traiter les grands nombres utilisés en cryptographie (256 bits par exemple). Aussi, les algorithmes de réduction modulaire ont fait l'objet de nombreuses recherches.

Une première approche consiste à déterminer les chiffres successifs du quotient par récurrence (méthode de division à la main): division avec ou sans restauration d'état, voire des versions plus avancées comme la méthode SRT (Sweeney, Robertson, Tocher). Ces algorithmes sont très génériques, mais ont une latence relativement élevée et ne se prêtent pas à des calculs sur les grands nombres. En outre, les méthodes de division rapide de type SRT nécessitent des circuits de taille importante.

Une seconde approche consiste à n'utiliser que des moduli de forme particulière (nombres de Mersenne par exemple), pour lesquels des algorithmes très efficaces sont connus.

Une troisième approche consiste à développer des algorithmes génériques se basant sur des pré-calculs souvent coûteux mais permettant ensuite d'effectuer un calcul rapide du reste modulaire. Parmi ces algorithmes, on peut notamment citer la méthode de Montgomery, la méthode de Barrett (voir US2007/297601 ou Vinodh Gopal et Al. "Fast and Constant-Time Implemetation of Modular Exponentiation", 28th International Symposium on Reliable Distributed Systems, 2009) ou celle de Barrett généralisée (voir FR2862454 A1 ou Miroslav Knezevi et Al. "Speeding Up Barrett and Montgomery Modular Multiplications", 2009).

On pourra trouver une présentation de la méthode de Montgomery et de la méthode de Barrett généralisée dans l'article de M. Knezevic *et al.* intitulé « Speeding up Barrett and Montgomery modular multiplications » publié en 2009.

La méthode de Barrett généralisée est rappelée ci-après. Elle fait appel à deux paramètres de réduction $\alpha \in \mathbf{Z}$, $\beta \in \mathbf{Z}$ remplissant des conditions qui seront précisées plus loin. La réduction de x modulo q, notée *x* mod q est définie par le reste *r* de la division euclidienne de x par q, soit :

$$r = x - q \lfloor x/q \rfloor \tag{1}$$

avec $0 \le r < q$ et où $\lfloor x/q \rfloor$ est le quotient défini comme la partie entière de $x/q$, c'est-à-dire le plus grand entier inférieur ou égal à $x/q$.

L'idée à la base de la méthode de Barrett est d'effectuer une estimation de [$x/q$] par valeurs inférieures en remarquant que :

$$\lfloor x/q \rfloor = \left\lfloor \frac{x}{2^{\alpha+\beta}} \dfrac{\left\lfloor \frac{2^{n+\alpha}}{q} \right\rfloor}{2^{\alpha-\beta}} \right\rfloor \tag{2}$$

l'estimation par valeurs inférieures étant alors donnée par l'entier :

$$k = \left\lfloor \frac{\mu \left\lfloor \dfrac{x}{2^{\alpha+\beta}} \right\rfloor}{2^{\alpha-\beta}} \right\rfloor \qquad (3)$$

où $\mu = \left\lfloor \dfrac{2^{n+\alpha}}{q} \right\rfloor$ est une constante qui peut être pré-calculée à partir de q. L'entier $k$ est une très bonne approximation de $\lfloor x/q \rfloor$ étant donné que l'on peut montrer que si $\alpha \geq n+1$ et $\beta \leq -2$ on a :

$$k \leq \left\lfloor x/q \right\rfloor \leq k+1 \qquad (4)$$

autrement dit [$x/q$] = $k$ ou [$x/q$] =$k+1$.

Bien entendu, les puissances de 2 apparaissant dans l'expression (3) se prêtent bien au calcul sur des valeurs binaires. Si l'on note $y \gg n$ le décalage de $n$ bits vers la droite, l'algorithme de Barrett généralisé peut être représenté par le pseudo-code suivant :

$$q \in \mathbf{Z}^{*},\ q < 2^n,\ 0 \leq x < 2^{2n},\ \alpha \geq n+1,\ \beta \leq -2$$

1.  $\mu \leftarrow \left\lfloor \dfrac{2^{n+\alpha}}{q} \right\rfloor$          pré-calcul de $\mu$

2.  $t \leftarrow x \gg (n+\beta)$

3.  $k \leftarrow (t\mu) \gg (\alpha - \beta)$

4.  $r' = x - kq$

5.  **if** $r' > q$ **then**

6.  $r' \leftarrow r' - q$

7.  **end if**

8.  **return** $r'$

On notera que la contrainte sur la taille de l'entrée x, sur au plus 2n bits, permet d'effectuer une multiplication modulaire (sur l'anneau $\mathbf{Z}_q$ où q est un entiers de n bits), autrement dit de calculer le produit z = xy avec x,y∈$\mathbf{Z}q$. Les valeurs x,y étant représentées sur $n$ bits, z est représenté sur $2n$ bits et peut faire l'objet d'une réduction modulaire au moyen de l'algorithme ci-dessus.

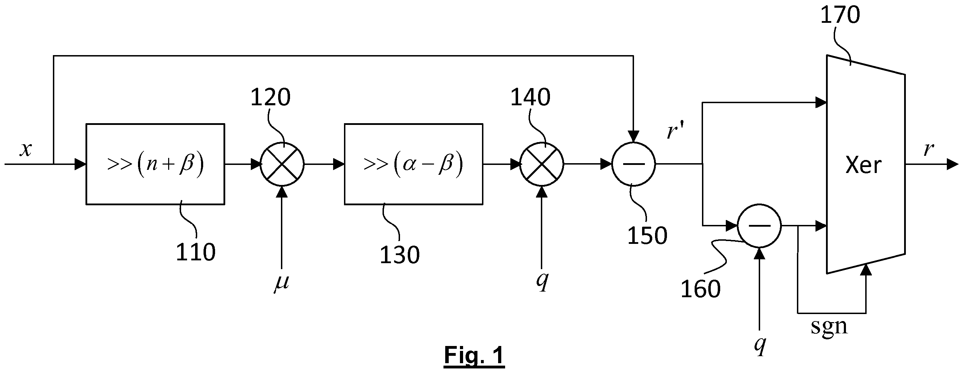

La Fig. 1 représente de manière schématique un circuit implémentant l'algorithme de Barrett généralisé.

La valeur x dont on souhaite effectuer la réduction modulaire est représentée par un mot de 2n bits. Ce mot est fourni à un premier circuit de décalage 110 dans lequel il subit un décalage vers la droite de ($n + \beta$) bits correspondant à une division par $2^{n+\beta}$. Un tel décalage est réalisé avantageusement en extrayant seulement les $n - \beta$ bits de poids forts de l'entrée. Le mot ainsi décalé est ensuite multiplié en 120 par le facteur $\mu$ précalculé.

Le résultat de la multiplication est fourni à un second circuit de décalage dans lequel il subit un décalage de ($\alpha - \beta$) bits vers la droite en 130 pour obtenir l'estimation $k$ du quotient.

Cette estimation du quotient est multipliée en 140 par le diviseur q et le résultat obtenu est soustrait à la valeur x en 150 pour donner une estimation provisoire $r'$ de $r$. Le diviseur q est ensuite soustrait à $r'$ en 160.

Un multiplexeur 170 sélectionne la valeur $r'$ en sortie du soustracteur 150 ou bien la valeur $r'-q$ en sortie du soustracteur 160 en fonction du signe de $r'-q$. Ainsi, le multiplexeur 170 fournit le résultat de la réduction modulaire $r$

comme *r'-q* si *r'-q* est strictement positif et comme *r'* si *r'-q* est négatif ou nul.

La méthode généralisée de Barrett permet d'effectuer une réduction modulaire de manière efficace. Toutefois,

$$\mu = \left\lfloor \frac{2^{n+\alpha}}{q} \right\rfloor$$

elle nécessite d'effectuer un pré-calcul de la valeur , ce qui augmente sensiblement la latence du circuit.

Le but de la présente invention est par conséquent de proposer un dispositif de calcul modulaire qui soit efficace et qui présente une latence inférieure à celle observée dans l'état de la technique.

## EXPOSÉ DE L'INVENTION

La présente invention est définie par un dispositif selon les revendications.

Dans un premier premier exemple non couvert par les revendications, la mémoire cache comprend une première partie, dite mémoire d'étiquettes, et une seconde partie, dite mémoire de données, les première et seconde parties étant adressées par *f (q)* où *f* est une fonction de projection de *n* bits sur *m* bits avec *m<n* , la première partie stockant à l'adresse *f(q')* la valeur d'étiquette q' ayant servi à calculer *f(q')* et la seconde partie stockant à la même adresse *f(q')*, ledit résultat du pré-calcul ($\mu(q')$).

Le circuit de division binaire est adapté à effectuer le pré-calcul $\mu = \left\lfloor \frac{2^{n+\alpha}}{q} \right\rfloor$ où $\left\lfloor \frac{2^{n+\alpha}}{q} \right\rfloor$ est le plus grand entier inférieur ou égal à $\frac{2^{n+\alpha}}{q}$ où $2^{n+\alpha}$ est ladite puissance de 2 et $\alpha$ est un entier tel que $\alpha \geq n + 1$.

Dans ce premier exemple, le circuit de Barrett décale de $\alpha + \beta$ bits le mot binaire représentant x vers les bits de poids faibles, où $\beta$ est un entier tel que $\beta \geq -2$ , multiplie ensuite le mot ainsi décalé par le résultat du pré-calcul, $\mu$, puis décale à nouveau de $\alpha - \beta$ bits le résultat de cette multiplication vers les bits de poids faibles pour obtenir un second mot, ledit second mot étant multiplié par le modulo avant d'être soustrait au mot binaire représentant x pour fournir une valeur provisoire *r'* du reste, la valeur du reste *r* étant choisie égale à *r'* si *r'-q* est négatif ou nul et égale à *r'-q* si *r'-q* est strictement positif.

Dans un second mode de réalisation, la mémoire cache reçoit en outre l'entier x et fournit en sus du résultat de pré-calcul relatif à une valeur du modulo q, une valeur de signe associé au couple *(x,q)*, cette valeur de signe étant fournie au circuit de Barrett.

La mémoire cache comprend avantageusement une première partie, dite mémoire d'étiquettes, et une seconde partie, dite mémoire de données, les première et seconde parties étant adressées par *g(x,q)* où *g* est une fonction de projection de *3n* bits sur *m* bits avec *m<3n,* la mémoire d'étiquettes stockant à l'adresse *g(x',q')* une valeur d'étiquette *(x',q')* ayant servi à calculer *g(x',q')* et la mémoire de données stockant, à la même adresse *g (x',q')*, ledit résultat du pré-calcul ($\mu(q')$) ainsi que ladite valeur de signe (*b(x',q')*) associée à l'étiquette *(x',q')*.

Le résultat du pré-calcul ainsi que la valeur de signe sont alors fournis directement par la mémoire cache au circuit de Barrett si le couple *(x,q)* est stocké dans la mémoire d'étiquettes, et sinon, le résultat du pré-calcul, $\mu$, est obtenu par le circuit de division binaire à partir de la valeur du modulo, *q*, et de la puissance de 2, la valeur du signe, *b*, étant obtenue à partir de la valeur du modulo, q, de l'entier, *x*, et du résultat du pré-calcul, le résultat du pré-calcul et la valeur de signe étant stockés dans la mémoire de données à l'adresse à calculer *g (x,q)* avant d'être fournis au circuit de Barrett.ion

Selon une première et une seconde variantes du second mode de réalisation, le dispositif de réduction modulaire comprend une seconde mémoire cache recevant l'entier x et le modulo q et fournissant une valeur de signe *b* stockée à une adresse en relation avec le couple *(x,q),* cette valeur de signe étant fournie au circuit de Barrett.

Selon ladite première variante, la seconde mémoire cache comprend une seconde mémoire d'étiquettes et une seconde mémoire de données, ces secondes mémoires d'étiquettes et de données étant toutes deux adressées par *h(x,q)* où *h* est une fonction de projection de 3n bits sur *m* bits avec *m < 3n,* la seconde mémoire d'étiquettes stockant à l'adresse *h(x',q')* une valeur d'étiquette *(x',q')* ayant servi à calculer *h(x',q')* et la seconde mémoire de données stockant, à la même adresse *h(x',q'),* ladite valeur de signe (*b(x',q')*) associée à l'étiquette *(x',q')*.

La valeur de signe est alors fournie directement par la seconde mémoire cache au circuit de Barrett si la valeur du modulo q est stockée dans la mémoire d'étiquettes et le couple (*x,q*) est stocké dans la seconde mémoire d'étiquettes, et sinon, la valeur du signe, *b*, est obtenue à partir de la valeur du modulo, q, et de l'entier, *x*, la valeur de signe étant ensuite fournie au circuit de Barrett.

Selon ladite seconde variante, la seconde mémoire cache comprend une seconde mémoire de données mais ne comprend pas de mémoire d'étiquettes, un comparateur pour vérifier si la sortie r du circuit de Barrett vérifie la

condition $0 \le r < q$ et que la valeur de signe ainsi obtenue (b(x,q)) stockée dans la seconde mémoire de données à l'adresse $h(x,q)$ en relation avec le couple $(x,q)$, où $h$ est une fonction de projection de 3n bits sur $m$ bits avec $m < 3n$, est inversée si ladite condition n'est pas vérifiée.

Dans le second mode de réalisation comme dans le premier, le circuit de division binaire effectue le pré-calcul

$$\mu = \left\lfloor \frac{2^{n+\alpha}}{q} \right\rfloor$$ où $\left\lfloor \frac{2^{n+\alpha}}{q} \right\rfloor$ est le plus grand entier inférieur ou égal à $\frac{2^{n+\alpha}}{q}$ où $2^{n+\alpha}$ est ladite puissance de 2 et $\alpha$ est un entier tel que $\alpha \ge n+1$.

Selon le second mode de réalisation, le circuit de Barrett décale de $\alpha + \beta$ bits le mot binaire représentant x vers les bits de poids faibles, où $\beta$ est un entier tel que $\beta \ge -2$, multiplie ensuite le mot ainsi décalé par le résultat du pré-calcul, $\mu$, puis décale à nouveau de $\alpha - \beta$ bits le résultat de cette multiplication vers les bits de poids faibles pour obtenir un second mot, la valeur de signe étant soustraite au second mot avant qu'il soit multiplié par le modulo, le résultat de cette multiplication étant ensuite soustrait à l'entier x pour donner ledit reste, $r$.

## BRÈVE DESCRIPTION DES DESSINS

D'autres caractéristiques et avantages de l'invention apparaîtront à la lecture d'un mode de réalisation préférentiel de l'invention, fait en référence aux figures jointes parmi lesquelles :

La Fig. 1, déjà décrite, représente de manière schématique un circuit de réduction modulaire implémentant l'algorithme de Barrett généralisé, connu de l'état de la technique;
La Fig. 2 représente l'architecture d'un dispositif de réduction modulaire selon un premier exemple non couvert par les revendications ;
La Fig. 3 représente de manière schématique la structure d'une mémoire cache utilisée dans le dispositif de la Fig. 2 ;
La Fig. 4 représente l'architecture d'un dispositif de réduction modulaire selon un second mode de réalisation de l'invention ;
La Fig. 5 représente de manière schématique la structure d'une mémoire cache utilisée dans le dispositif de la Fig. 4 ;
La Fig. 6 représente l'architecture d'un dispositif de réduction modulaire selon une variante du second mode de réalisation de l'invention ;
La Fig. 7 représente l'architecture d'un dispositif de réduction modulaire selon une seconde variante du second mode de réalisation de l'invention ;
La Fig. 8 représente de manière schématique un circuit de réduction modulaire de Barrett simplifié, utilisé dans le dispositif de la Fig. 4 ou celui des Figs. 6 et 7.

## EXPOSÉ DÉTAILLÉ DE MODES DE RÉALISATION PARTICULIERS

L'idée à la base de l'invention est de combiner un circuit de réduction modulaire implémentant l'algorithme de Barrett avec une mémoire cache et un circuit de division binaire, comme décrit en détail ci-après. L'introduction d'une mémoire cache permet d'éviter la répétition de pré-calculs de valeurs de $\mu$ précédemment effectués, ces pré-calculs étant pris en charge par le circuit de division binaire dans le cas où les valeurs de $\mu$ ne figurent pas dans la mémoire cache.

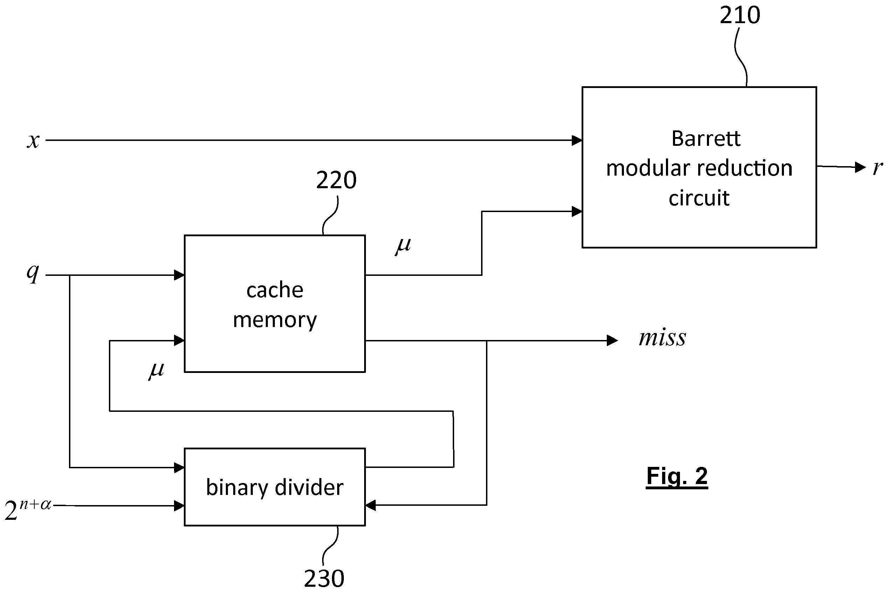

La Fig. 2 représente l'architecture d'un dispositif de réduction modulaire selon un premier exemple non couvert par les revendications.

Il comprend un circuit de réduction modulaire implémentant l'algorithme de Barrett généralisé, 210, dont la structure a été décrite en relation avec la Fig. 1, une mémoire cache 220, destinée à contenir des valeurs récentes de

$$\mu(q) = \left\lfloor \frac{2^{n+\alpha}}{q} \right\rfloor$$ et un circuit de division binaire, 230.

Le circuit de réduction modulaire de Barrett, 210, reçoit d'une part la valeur x dont on souhaite effectuer la réduction modulaire et, d'autre part, la valeur du coefficient $\mu$ lue dans la mémoire cache, 220. Il fournit en sortie le reste modulaire $r$ comme décrit précédemment.

La mémoire cache 220 est adressée en lecture par le modulo q. Si la valeur $\mu(q) = \left\lfloor \frac{2^{n+\alpha}}{q} \right\rfloor$ est présente dans la mémoire cache (*miss* = 0), celle-ci est fournie directement au circuit de réduction modulaire de Barrett. En revanche, si la valeur $\mu(q)$ n'est pas présente dans la mémoire cache, un signal de contrôle (*miss* =1) déclenche le

calcul de $\mu(q)$ par le circuit de division binaire 230. Celui-ci reçoit d'une part le modulo q et d'autre part $2^{n+\alpha}$, voire simplement la valeur $\alpha$, le mot binaire correspondant à $2^{n+\alpha}$ ( $n+\alpha+1^{\text{ème}}$ bit de poids fort égal à « 1 » et autres bits à zéro) étant simplement généré à l'entrée du circuit de division binaire.

Le circuit de division binaire calcule le quotient $\left\lfloor \dfrac{2^{n+\alpha}}{q} \right\rfloor$ et le fournit à la mémoire cache pour y être stocké en relation avec le modulo q .

On comprend ainsi que soit la valeur de $\mu(q)$ est déjà présente dans la mémoire cache et elle est alors fournie directement au circuit de réduction modulaire de Barrett, soit elle est absente de la mémoire en question et un pré-calcul de $\mu(q)$ est effectué par le circuit de division binaire. On évite ainsi d'effectuer systématiquement le pré-calcul de $\mu(q)$, la latence du dispositif s'en trouve donc réduite en régime établi.

Le circuit de division binaire 230 implémente avantageusement un algorithme de division sans restauration du dividende. On trouvera par exemple une description de cet algorithme dans l'ouvrage de J-P Deschamps, intitulé « Hardware implémentation of finite-field arithmetic », McGraw-Hill, Inc., NY, USA, 2009.

La mémoire cache 220 est de préférence une mémoire rapide et fortement intégrée avec la logique de calcul (par exemple de type SRAM) de petite taille (typiquement de plusieurs KB jusqu'à une dizaine de MB). Avantageusement, sa taille peut être paramétrable selon le temps de latence souhaité.

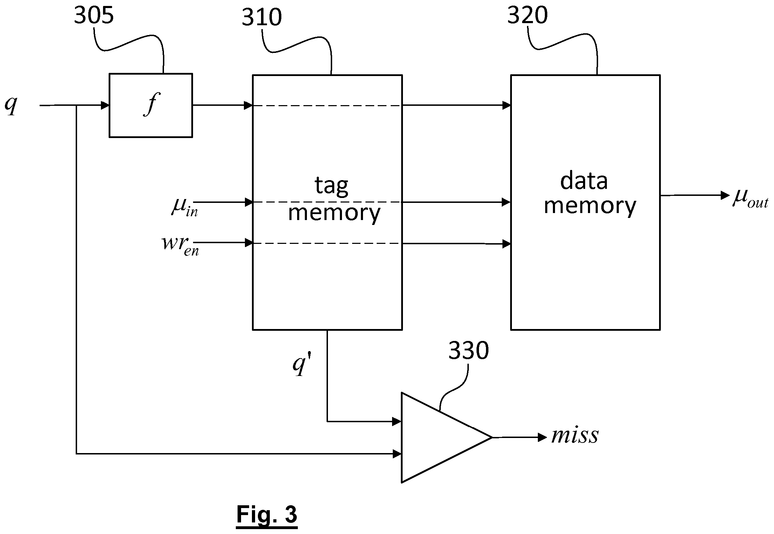

La structure de la mémoire cache 220 est illustré en Fig. 3. Elle comprend une première partie, dite mémoire d'étiquettes (*tag memory*), 310 et une seconde partie dite mémoire de données, 320.

La mémoire cache possède trois entrées q, $\mu_{in}$ et $wr_{en}$. L'entrée q reçoit la valeur du modulo, autrement dit du diviseur avec lequel on opère. L'entrée $\mu_{in}$ reçoit la valeur $\mu$ associée à q lorsque la mémoire cache est en écriture ($wr_{en}$ = 1) et $wr_{en}$ est un bit indiquant si la mémoire est en écriture et plus précisément si la valeur $\mu(q)$ associée à q dans la mémoire de données doit être remplacée.

La mémoire cache possède en outre deux sorties, $\mu_{out}$ et *miss*. La sortie $\mu_{out}$ fournit la valeur $\mu(q)$ associée à $f(q)$, stockée dans la mémoire de données où $f$ est une fonction surjective explicitée plus loin, et le bit *miss* indique si la bonne valeur $\mu(q)$ est bien dans le cache. Dans le cas où cette valeur n'est pas présente dans la mémoire de données, la sortie $\mu_{out}$ fournit une valeur erronée $\mu(q')$ (vérifiant $f(q') = f(q)$) et le bit *miss* prend la valeur 1.

La fonction de projection $f$ est une fonction surjective de $\{0,1\}^n$ dans $\{0,1\}^m$ avec $m < n$ faisant correspondre à chaque valeur de q (sur $n$ bits) un condensat $f(q)$ (sur $m$ bits). Un exemple de fonction $f$ est la troncation des $n - q$ bits de poids faibles de q mais d'autres fonctions peuvent être alternativement choisies.

La mémoire d'étiquettes est adressée par $f(q)$ et contient à cette adresse la valeur du module (l'étiquette) q qui a servi à la générer. La mémoire de données est également adressée par $f(q)$ et contient la valeur $\mu(q)$ pour la valeur q associée à $f(q)$ dans la mémoire d'étiquettes.

On comprend ainsi que la mémoire cache est de taille $2^{m+1}$ (taille $2^m$ pour la mémoire d'étiquettes et taille $2^m$ pour la mémoire de données). La mémoire d'étiquettes permet de discriminer les cas de collision. Lorsque l'on souhaite obtenir la valeur $\mu(q)$ pour une valeur de modulo q donnée, le condensat $f(q)$ est calculé en 305 et l'étiquette (notée q') stockée à l'adresse $f(q)$ est lue ($w_{ren}$ = 0) dans la mémoire d'étiquettes. Le comparateur 330 en sortie de la mémoire d'étiquette compare si q est égal à l'étiquette q'. Dans la négative, il y a collision, c'est-à-dire que l'on a $q \neq q'$ avec $f(q) = f(q')$ et le bit *miss* l'indique (*miss* = 1). Une fois que la valeur de $\mu(q)$ a été calculée par le circuit de division binaire, la mémoire cache passe en mode écriture ($w_{ren}$ =1), l'étiquette q est stockée à l'adresse $f(q)$ dans la mémoire d'étiquettes et la valeur $\mu(q)$ ainsi calculée est stockée à l'adresse q dans la mémoire de données.

En revanche, si $q = q'$, la valeur stockée dans la mémoire de données en relation avec $f(q)$ est bien la valeur correcte $\mu(q)$ et le bit *miss* l'indique également (*miss* = 0).

La coopération de la mémoire cache avec le circuit de réduction modulaire de Barrett permet d'optimiser le temps de calcul. Lorsque la mémoire cache contient la valeur $\mu(q)$ du modulo présent à l'entrée, la réduction modulaire est effectuée de manière optimale, en seulement quelques cycles. En revanche, si elle ne la contient pas, la valeur $\mu(q)$ est calculée par le circuit de division binaire, ce qui requiert plusieurs cycles de calcul. Etant donné qu'une opération de multiplication ou d'exponentiation modulaire fait intervenir un grand nombre de fois consécutives le même modulo, le temps total moyen de calcul est sensiblement inférieur à celui observé dans l'état de la technique pour les mêmes conditions.

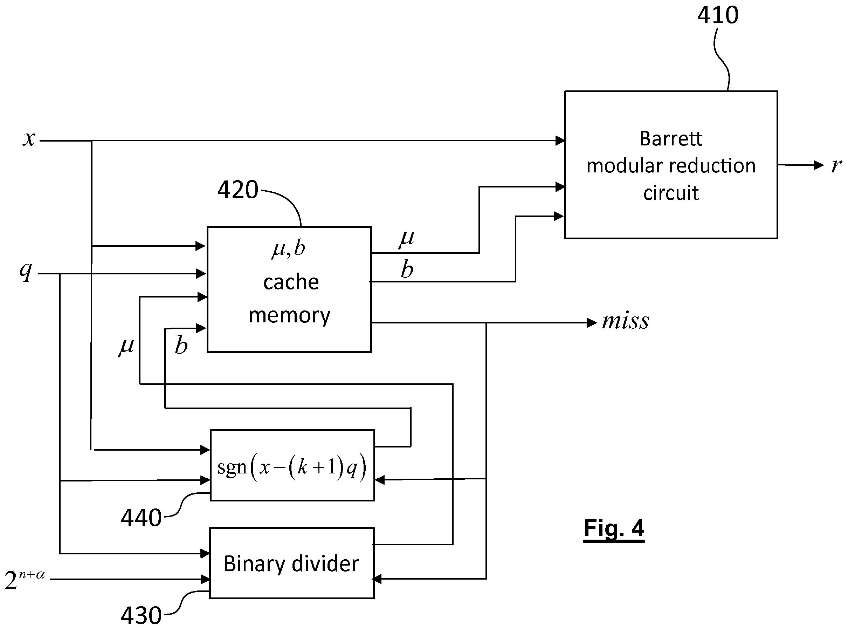

La Fig. 4 représente de manière schématique l'architecture d'un dispositif de réduction modulaire selon un second mode de réalisation de l'invention.

Ce second mode de réalisation se distingue du exemple, d'une part, en ce qu'il contient un circuit (de réduction modulaire) de Barrett simplifié, 410, comme décrit plus loin, et, d'autre part, en ce que la mémoire cache 420 reçoit en sus de la valeur de modulo, q, la valeur x dont on souhaite effectuer la réduction modulaire.

La valeur x ainsi que les valeurs $\mu, b$ lues dans la mémoire cache sont fournies au circuit de Barrett simplifié 410 qui en déduit le reste modulaire $r$.

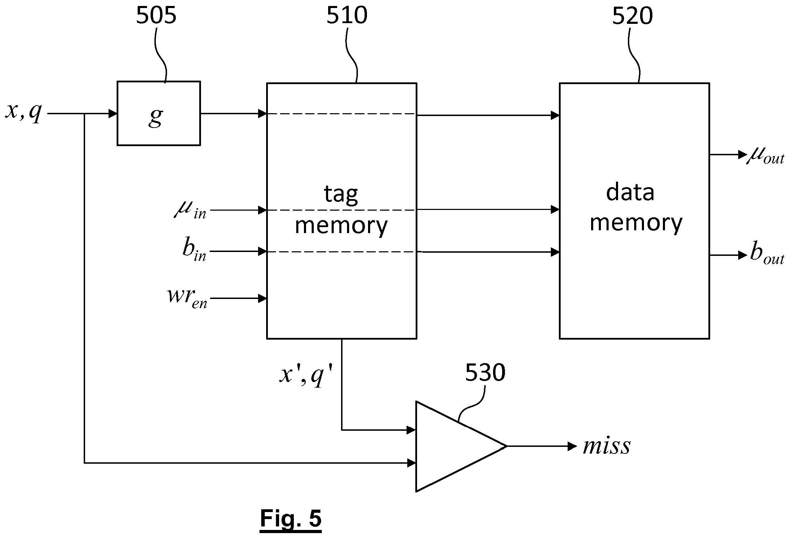

L'architecture de la mémoire cache 420 a été représentée en Fig. 5.

La mémoire d'étiquettes 510 est adressée par $g(x,\mu)$ calculé en 505, où $g$ est une fonction surjective de $\{0,1\}^{2n}$ x$\{0,1\}^n$ dans $\{0,1\}^m$ avec $m < 3n$ associant à tout couple $(x,\mu)$ un condensat sur $m$ bits. Par exemple la fonction $g$ peut concaténer les $m-\eta$ bits MSB de $x$, $0 < \eta < m$ avec les $\eta$ MSB de $\mu$ pour former le condensat, mais bien entendu d'autres fonctions de projection peuvent être alternativement choisies. De préférence, on choisira $\eta = m - 1$, autrement dit seul le MSB de x sera pris en compte dans le condensat. Dans tous les cas, la mémoire d'étiquettes fournit l'étiquette stockée à l'adresse $g(x,\mu)$.

La mémoire de données 520 est également adressée par $g(x,\mu)$ et fournit, lorsque l'étiquette $(x',\mu')$ est la bonne, c'est-à-dire lorsque $(x',\mu') = (x,\mu)$, non seulement la valeur $\mu(q)$ sur la sortie $\mu_{out}$ mais aussi le signe $b(x,q)$ $=x$-(k+1)$q$ sur la sortie $b_{out}$ où $k$ est donné par l'expression (3). On prend ici comme convention $b_{out} = 0$ si le résultat et positif et $b_{out} = 1$ dans le cas négatif.

Lorsque l'étiquette n'est pas présente dans la mémoire d'étiquettes 520, la valeur $\mu(q)$ est obtenue par le circuit de division binaire 430 et le signe $b(x,q) = x - (k + 1)q$ en est déduit dans le circuit de calcul de signe 440. Le couple $(x,\mu)$ est alors stocké à l'adresse $g(x,\mu)$ de la mémoire d'étiquettes et le couple $(\mu(q),b(x,q))$ des valeurs précédemment calculées est stocké à l'adresse $g(x,\mu)$ de la mémoire de données.

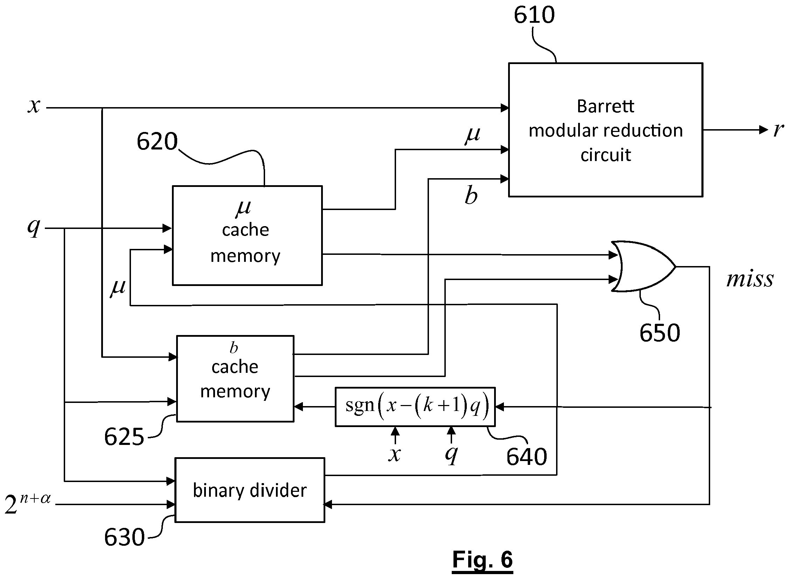

La Fig. 6 représente l'architecture d'un dispositif de réduction modulaire selon une première variante du second mode de réalisation de l'invention.

Cette variante se distingue de celle représentée en Fig. 4 en ce qu'elle comporte deux mémoires cache indépendantes, une pour les valeurs du coefficient $\mu$, 620, et une autre pour les valeurs du signe $b$, 625.

La première mémoire cache 620 fonctionne essentiellement comme la mémoire cache 220. Elle reçoit en entrée la valeur du modulo, q. Lorsque l'étiquette q est présente dans la mémoire d'étiquettes du cache, la valeur $\mu(q)$ stockée dans la mémoire de données à l'adresse $f(q)$ est fournie directement au circuit (de réduction modulaire) de Barrett simplifié, 610. Dans la négative (*miss* = 1), la valeur de $\mu(q)$ est calculée à partir du modulo q et de la constante binaire $2^{n+\alpha}$ par le circuit de division binaire 630, identique au circuit 230 et implémentant avantageusement un algorithme de division sans restauration. La valeur de $\mu(q)$ ainsi calculée est stockée dans la mémoire de données à l'adresse $f(q)$.

La seconde mémoire cache 625 reçoit en entrée la valeur x et la valeur du modulo $q$. Lorsque le couple $(x,q)$ est stocké à l'adresse $h(x,q)$ de la mémoire d'étiquettes où $h$ est la fonction de projection dans le cache, la valeur de signe $b(x,q)$ est lue dans la mémoire de données et fournie au circuit de Barrett simplifié 610. Dans la négative, la valeur de signe $b(x,q)$ est calculée par le circuit de calcul de signe, 640, à partir de $x,q$ : $b(x,q) = sgn(x-(k+1)q)$ où $k$ est calculé au moyen de l'expression (3). Le cas échéant, le circuit de calcul de signe peut aussi recevoir la valeur $\mu(q)$, lorsque celle-ci a été validée, ce afin de réduire la latence lorsque la valeur $\mu(q)$ est présente dans le cache 620 mais que le signe $b(x,q)$ est absent du cache 625. La valeur de signe stockée à l'adresse $h(x,q)$ est mise à jour (autrement dit inversée) lorsque la vérification d'étiquette à l'adresse $h(x,q)$ échoue.

Dans la variante illustrée, le calcul de $\mu(q)$ et de $b(x,q)$ est effectué dès lors que l'un deux n'est pas trouvé dans le cache correspondant, le signal d'échec (*miss* = 1) étant généré par la porte logique OU, 650.

Dans le cas du second mode de réalisation (Fig. 4) et de sa première variante (Fig. 6), on a supposé que chaque mémoire cache contenait une mémoire d'étiquettes pour résoudre les collisions ainsi qu'une mémoire de données permettant de retrouver l'information pertinente (coefficient $\mu$ et/ou signe $b$) en absence de collision. Toutefois, dans une seconde variante, on pourra se passer le cas échéant de la mémoire d'étiquettes (et donc de la détection de collision) dans la mesure où le couple $(\mu',b')$ bien qu'erroné conduit (fortuitement) à un résidu modulaire $0 \leq x-(k'-b')q < q$ où $k'$ est obtenu à partir de $\mu'$ selon l'expression (3). En effet, l'unicité du résultat de la division euclidienne assure que le résidu modulaire est alors correct. On pourra néanmoins effectuer le calcul des valeurs correctes $\mu(q)$ et/ou $b(x,q)$ pour mettre à jour la mémoire de données à l'adresse correspondante. Cette mise à jour peut d'ailleurs être réalisée après que la valeur de résidu modulaire ait été fournie en sortie, sans pénaliser la latence.

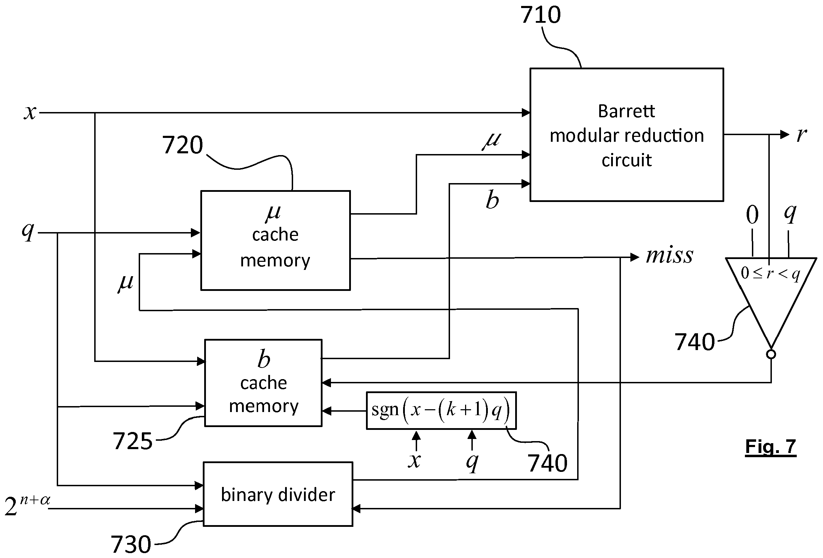

La Fig. 7 représente l'architecture d'un dispositif de réduction modulaire selon une seconde variante du second mode de réalisation de l'invention.

Les éléments 710 à 740 sont identiques ou similaires aux éléments correspondants 610 à 640. Toutefois dans cette seconde variante, la mémoire cache de $b$, 725, ne comprend pas de mémoire d'étiquettes. La mise à jour de la mémoire cache 725 intervient lorsque la valeur en sortie du circuit de Barrett 710 ne vérifie pas la condition $0 \leq r < q$, condition déterminée par le comparateur 750.

La réduction modulaire au moyen du dispositif selon le second mode de réalisation (Fig. 4 et Figs. 6-7) est plus rapide que dans le premier mode de réalisation (Fig. 2). En effet, comme on le verra plus loin, le circuit de Barrett simplifié (410,610,710) est moins profond que le circuit de Barrett 110 de la Fig. 1. De plus, la séparation du cache en deux caches indépendants permet d'offrir plus de latitude dans le choix des fonctions de projection $f$ et $h$. Dans le cas de fonctionnement sans mémoire d'étiquettes (Fig. 7) pour la mémoire cache de signe (Fig. 7), on a une probabilité élevée que la valeur correcte de $b$ soit stockée dans le cache 725 à l'adresse $h(q,x)$. Cette valeur de signe est validée par le comparateur 750. La taille mémoire combinée des caches 720 et 725 est donc généralement inférieure à la taille mémoire du cache 420.

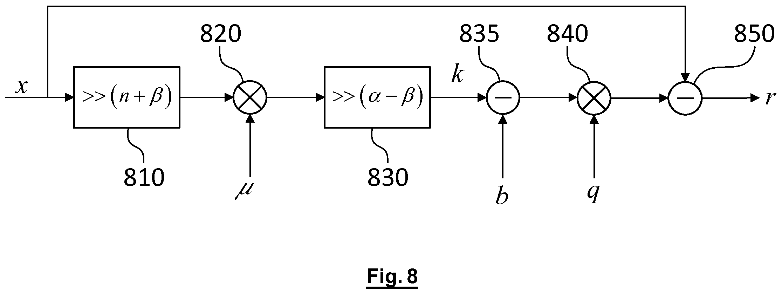

La Fig. 8 représente de manière schématique le circuit de Barrett simplifié en 410 de la Fig. 4, 610 de la Fig. 6 et 710 de la Fig. 7.

Les éléments 810-850 sont respectivement identiques aux éléments 110-150 du circuit de Barrett représenté en Fig. 1, leur description ne sera donc pas reprise ici.

A la différence du circuit de la Fig. 1, la valeur $b$ , c'est-à-dire le signe lu dans la mémoire cache, est soustraite en 835 à $k$ pour fournir directement le reste modulaire :

$$r = x - (k - b)q \qquad\qquad (5)$$

Comme mentionné précédemment, la présente invention permet de réduire en moyenne le temps de calcul pour une réduction modulaire. En outre, l'empreinte matérielle du circuit de Barrett et du circuit de division binaire étant très faible, le circuit correspondant à l'ensemble du dispositif de réduction modulaire est aussi de très faible taille. Enfin, la taille de la mémoire cache peut être paramétrable. Par exemple, si l'on implémente le dispositif de réduction modulaire à l'aide d'un FPGA, une mémoire cache de grande taille pourra être envisagée. En revanche, pour une implémentation à l'aide d'un circuit ASIC, une mémoire cache de faible taille, constituée par exemple de quelques registres seulement, pourra être préférée.

**Revendications**

1.  Dispositif de réduction modulaire pour calculer le reste d'un entier x divisé par un modulo q, ledit entier étant représenté par un mot binaire de *2n* bits et le modulo par un mot binaire de *n* bits, **caractérisé en ce qu'**il comprend un circuit implémentant un algorithme de réduction modulaire de Barrett généralisé, dit circuit de Barrett (410), une mémoire cache (420) et un circuit de division binaire (430), le circuit de Barrett recevant ledit entier ainsi qu'un résultat d'un pré-calcul $\mu$ relatif à une valeur du modulo q et une puissance de $2(2^{n+\alpha})$, le résultat du pré-calcul étant fourni directement par la mémoire cache au circuit de Barrett s'il est déjà stocké en relation avec ladite valeur du modulo et, sinon, étant calculé par le circuit de division binaire avant d'être stocké dans la mémoire cache et fourni au circuit de Barrett, la mémoire cache (420) recevant en outre l'entier x et fournissant en sus du résultat de pré-calcul relatif à une valeur du modulo q, une valeur de signe b associé au couple (x,q), cette valeur de signe étant fournie au circuit de Barrett, ladite mémoire cache comprenant une première partie, dite mémoire d'étiquettes (510), et une seconde partie, dite mémoire de données (520), les première et seconde parties étant adressées par g(x,q) où g est une fonction de projection de 3n bits sur *m* bits avec *m < 3n*, la mémoire d'étiquettes stockant à l'adresse g(x',q') une valeur d'étiquette (x',g') ayant servi à calculer g(x',q') et la mémoire de données stockant, à la même adresse g(x',q'), le résultat d'un pré-calcul $\mu(q')$ ainsi que la valeur de signe b(x',q') associée à l'étiquette (x',q').

2.  Dispositif de réduction modulaire selon la revendication 1, **caractérisé en ce que** le résultat du pré-calcul ainsi que la valeur de signe sont fournis directement par la mémoire cache (420) au circuit de Barrett (410) si le couple (x,q) est stocké dans la mémoire d'étiquettes, et sinon, le résultat du pré-calcul, $\mu$, est obtenu par le circuit de division binaire (430) à partir de la valeur du modulo, q, et de la puissance de 2, la valeur du signe, b , étant obtenue à partir de la valeur du modulo, q, de l'entier, x, et du résultat du pré-calcul, le résultat du pré-calcul et la valeur de signe étant stockés dans la mémoire de données à l'adresse à calculer g(x,q) avant d'être fournis au circuit de Barrett.

3.  Dispositif de réduction modulaire pour calculer le reste d'un entier x divisé par un modulo q, ledit entier étant représenté par un mot binaire de *2n* bits et le modulo par un mot binaire de *n* bits, **caractérisé en ce qu'**il comprend un circuit implémentant un algorithme de réduction modulaire de Barrett généralisé, dit circuit de Barrett (610), une première mémoire cache (620) et un circuit de division binaire (630), le circuit de Barrett recevant ledit entier ainsi qu'un résultat d'un pré-calcul, $\mu$, relatif à une valeur du modulo q et une puissance de 2 ($2^{n+\alpha}$), le résultat du pré-calcul étant fourni directement par la première mémoire cache au circuit de Barrett s'il est déjà stocké en relation avec ladite valeur du modulo et, sinon, étant calculé par le circuit de division binaire avant d'être stocké dans la première mémoire cache et fourni au circuit de Barrett, la première mémoire cache comprenant une première partie, dite mémoire d'étiquettes, et une seconde partie, dite mémoire de données, les première et seconde parties étant adressées par $f(q)$ où f est une fonction de projection de *n* bits sur *m* bits avec *m<n* , la première partie stockant à l'adresse $f(q')$ la valeur d'étiquette q' ayant servi à calculer $f(q')$ et la seconde partie stockant à la même adresse $f(q')$, le résultat d'un pré-calcul $\mu(q')$, ledit dispositif de réduction modulaire comprenant une seconde mémoire cache (625) recevant l'entier x et le modulo q et fournissant une valeur de signe b stockée à une adresse en relation avec le couple (x, q) , cette valeur de signe étant fournie au circuit de Barrett, la seconde mémoire cache (625) comprenant une seconde mémoire d'étiquettes et une seconde mémoire de données, ces secondes mémoires d'étiquettes et de données étant toutes deux adressées par $h(x,q)$ où $h$ est une fonction de projection de 3n bits sur $m$ bits avec $m < 3n$, la seconde mémoire d'étiquettes stockant à l'adresse $h(x',q')$ une valeur d'étiquette $(x',y')$ ayant servi à calculer $h(x',q')$ et la seconde mémoire de données stockant, à la même adresse $h(x',q')$, la valeur de signe $b(x',q')$ associée à l'étiquette $(x',y')$.

4. Dispositif de réduction modulaire selon la revendication 3, **caractérisé en ce que** la valeur de signe est fournie directement par la seconde mémoire cache (625) au circuit de Barrett (610) si la valeur du modulo q est stockée dans la mémoire d'étiquettes et le couple $(x,q)$ est stocké dans la seconde mémoire d'étiquettes, et sinon, la valeur du signe, $b$ , est obtenue à partir de la valeur du modulo, $q$ et de l'entier, x, la valeur de signe étant ensuite fournie au circuit de Barrett.

5. Dispositif de réduction modulaire pour calculer le reste d'un entier x divisé par un modulo $q$, ledit entier étant représenté par un mot binaire de $2n$ bits et le modulo par un mot binaire de $n$ bits, **caractérisé en ce qu'**il comprend un circuit implémentant un algorithme de réduction modulaire de Barrett généralisé, dit circuit de Barrett (710), une première mémoire cache (720) et un circuit de division binaire (730), le circuit de Barrett recevant ledit entier ainsi qu'un résultat d'un pré-calcul $\mu$ relatif à une valeur du modulo q et une puissance de 2 ($2^{n+\alpha}$), le résultat du pré-calcul étant fourni directement par la première mémoire cache au circuit de Barrett s'il est déjà stocké en relation avec ladite valeur du modulo et, sinon, étant calculé par le circuit de division binaire avant d'être stocké dans la première mémoire cache et fourni au circuit de Barrett, le dispositif de réduction modulaire comprenant une seconde mémoire cache (725) recevant l'entier x et le modulo q et fournissant une valeur de signe $b$ stockée à une adresse en relation avec le couple $(x,q)$ , cette valeur de signe étant fournie au circuit de Barrett, , la première mémoire cache comprenant une première partie, dite mémoire d'étiquettes, et une seconde partie, dite mémoire de données, les première et seconde parties étant adressées par $f(q)$ où f est une fonction de projection de $n$ bits sur $m$ bits avec $m<n$ , la première partie stockant à l'adresse $f(q')$ la valeur d'étiquette q' ayant servi à calculer $f(q')$ et la seconde partie stockant à la même adresse $f(q')$, le résultat d'un pré-calcul, $\mu(q')$, la seconde mémoire cache (725) comprenant une seconde mémoire de données mais ne comprend pas de mémoire d'étiquettes, un comparateur (750) pour vérifier si la sortie $r$ du circuit de Barrett (710) vérifie la condition $0 \leq r < q$ et que la valeur de signe ainsi obtenue $b$ stockée dans la seconde mémoire de données à l'adresse $h(x,q)$ en relation avec le couple $(x,q)$, où $h$ est une fonction de projection de 3n bits sur $m$ bits avec $m < 3n$, est inversée si ladite condition n'est pas vérifiée.

6. Dispositif de réduction modulaire selon l'une quelconque des revendications 1à 5, **caractérisé en ce que** le circuit

$$\mu = \left\lfloor \frac{2^{n+\alpha}}{q} \right\rfloor$$ de division binaire (430,630,730) effectue le pré-calcul où $\left\lfloor \dfrac{2^{n+\alpha}}{q} \right\rfloor$ est le plus grand entier inférieur

ou égal à $\dfrac{2^{n+\alpha}}{q}$ où $2^{n+\alpha}$ est ladite puissance de 2 et $\alpha$ est un entier tel que $\alpha \geq n + 1$.

7. Dispositif de réduction modulaire selon la revendication 6, **caractérisé en ce que** le circuit de Barrett (410,610,710) décale (810) de $\alpha + \beta$ bits le mot binaire représentant x vers les bits de poids faibles, où $\beta$ est un entier tel que $\beta \geq$ -2, multiplie (820) ensuite le mot ainsi décalé par le résultat du pré-calcul, $\mu$, puis décale (830) à nouveau de $\alpha - \beta$ bits le résultat de cette multiplication vers les bits de poids faibles pour obtenir un second mot, la valeur de signe étant soustraite (835) au second mot avant qu'il soit multiplié (840) par le modulo, le résultat de cette multiplication étant ensuite soustrait (850) à l'entier x pour donner ledit reste, $r$.

**Patentansprüche**

1. Einrichtung zur modularen Reduktion zum Berechnen des Rests einer ganzen Zahl x dividiert durch Modulo $q$, wobei die ganze Zahl durch ein Binärwort von 2n Bits und der Modulo durch ein Binärwort von $n$ Bits dargestellt wird,

**dadurch gekennzeichnet, dass** sie eine Schaltung, die einen verallgemeinerten Barrett-Algorithmus zur modularen Reduktion implementiert, Barrett-Schaltung (410) genannt, einen Cache-Speicher (420) und eine Binärdivisionsschaltung (430) umfasst, wobei die Barrett-Schaltung die genannte ganze Zahl sowie ein Ergebnis einer Vorausberechnung $\mu$ in Bezug auf einen Modulo-Wert q und eine Potenz von 2 ($2^{n+\alpha}$) empfängt, wobei das Ergebnis der Vorausberechnung direkt vom Cache-Speicher an die Barrett-Schaltung geliefert wird, wenn es bereits in Bezug auf den genannten Modulo-Wert abgespeichert ist, und ansonsten von der Binärdivisionsschaltung berechnet wird, bevor es im Cache-Speicher abgespeichert und an die Barrett-Schaltung geliefert wird, wobei der Cache-Speicher (420) ferner die ganze Zahl x empfängt und neben dem Ergebnis der Vorausberechnung in Bezug auf den Modulo-Wert q einen Wert mit dem Paar (x,q) zugeordnetem Vorzeichen b liefert, wobei dieser Vorzeichenwert der Barrett-Schaltung geliefert wird,

wobei der Cache-Speicher einen ersten Teil, Etikettenspeicher (510) genannt, und einen zweiten Teil, Datenspeicher (520) genannt, umfasst, wobei der erste und der zweite Teil mit g(x, q) adressiert sind, worin g eine Funktion der Projektion von 3n Bits auf m Bits mit m < 3n ist, wobei der Etikettenspeicher an der Adresse g(x', q') einen Etikettenwert (x', q') abspeichert, der zum Berechnen von g(x',q') gedient hat, und der Datenspeicher an der gleichen Adresse g(x', q') das Ergebnis einer Vorausberechnung $\mu(q')$ sowie den dem Etikett (x', q') zugeordneten Vorzeichenwert b(x',q') abspeichert.

2. Einrichtung zur modularen Reduktion nach Anspruch 1, **dadurch gekennzeichnet, dass** das Ergebnis der Vorausberechnung sowie der Vorzeichenwert direkt vom Cache-Speicher (420) an die Barrett-Schaltung (410) geliefert werden, wenn das Paar (x,q) im Etikettenspeicher abgespeichert ist, und ansonsten das Ergebnis der Vorausberechnung $\mu$ von der Binärdivisionsschaltung (430) aus dem Modulo-Wert q und der Potenz von 2 erhalten wird, wobei der Vorzeichenwert b aus dem Modulo-Wert q der ganzen Zahl x und dem Vorausberechnungsergebnis erhalten wird, wobei das Vorausberechnungsergebnis und der Vorzeichenwert im Datenspeicher an der zu berechnenden Adresse g(x, q) abgespeichert werden, bevor sie an die Barrett-Schaltung geliefert werden.

3. Einrichtung zur modularen Reduktion zum Berechnen des Rests einer ganzen Zahl x dividiert durch Modulo q, wobei die ganze Zahl durch ein Binärwort von 2n Bits und der Modulo durch ein Binärwort von n Bits dargestellt wird, **dadurch gekennzeichnet, dass** sie eine Schaltung, die einen verallgemeinerten Barrett-Algorithmus zur modularen Reduktion implementiert, Barrett-Schaltung (610) genannt, einen ersten Cache-Speicher (620) und eine Binärdivisionsschaltung (630) umfasst, wobei die Barrett-Schaltung die genannte ganze Zahl sowie ein Ergebnis einer Vorausberechnung $\mu$ in Bezug auf einen Modulo-Wert q und eine Potenz von 2 ($2^{n+\alpha}$) empfängt, wobei das Ergebnis der Vorausberechnung direkt vom Cache-Speicher an die Barrett-Schaltung geliefert wird, wenn es bereits in Bezug auf den genannten Modulo-Wert abgespeichert ist, und ansonsten von der Binärdivisionsschaltung berechnet wird, bevor es im ersten Cache-Speicher abgespeichert und an die Barrett-Schaltung geliefert wird, wobei der erste Cache-Speicher einen ersten Teil, Etikettenspeicher genannt, und einen zweiten Teil, Datenspeicher genannt, umfasst, wobei der erste und der zweite Teil mit $f(q)$ adressiert sind, worin $f$ eine Funktion der Projektion von n Bits auf m Bits mit m < n ist, wobei der erste Teil an der Adresse $f(q')$ den Etikettenwert q' abspeichert, der zum Berechnen von $f(q')$ gedient hat, und der zweite Teil an der gleichen Adresse $f(q')$ das Ergebnis einer Vorausberechnung $\mu(q')$ abspeichert, wobei die Einrichtung zur modularen Reduktion einen zweiten Cache-Speicher (625) umfasst, der die ganze Zahl x und den Modulo q empfängt und einen Vorzeichenwert b liefert, der an einer Adresse in Bezug auf das Paar (x,q) abspeichert, wobei dieser Vorzeichenwert an die Barrett-Schaltung geliefert wird, wobei der zweite Cache-Speicher (625) einen zweiten Etikettenspeicher und einen zweiten Datenspeicher umfasst, wobei dieser zweite Etikettenspeicher und dieser zweite Datenspeicher beide mit h(x, q) adressiert sind, worin h eine Funktion der Projektion von 3n Bits auf m Bits mit m < 3n ist, wobei der zweite Etikettenspeicher an der Adresse h(x', q') einen Etikettenwert (x', q') abspeichert, der zum Berechnen von h(x', q') gedient hat, und der zweite Datenspeicher an der gleichen Adresse h(x', q') den dem Etikett (x', q') zugeordneten Vorzeichenwert b(x',q') abspeichert.

4. Einrichtung zur modularen Reduktion nach Anspruch 3, **dadurch gekennzeichnet, dass** der Vorzeichenwert direkt vom zweiten Cache-Speicher (625) an die Barrett-Schaltung (610) geliefert wird, wenn der Modulo-Wert q in dem Etikettenspeicher abgespeichert ist und das Paar (x,q) im zweiten Etikettenspeicher abgespeichert ist, und ansonsten der Vorzeichenwert b aus dem Modulo-Wert q und der ganzen Zahl x erhalten wird, wobei der Vorzeichenwert dann an die Barrett-Schaltung geliefert wird.

5. Einrichtung zur modularen Reduktion zum Berechnen des Rests einer ganzen Zahl x dividiert durch Modulo q, wobei die ganze Zahl durch ein Binärwort von 2n Bits und der Modulo durch ein Binärwort von n Bits dargestellt wird, **dadurch gekennzeichnet, dass** sie eine Schaltung, die einen verallgemeinerten Barrett-Algorithmus zur modularen Reduktion implementiert, Barrett-Schaltung (710) genannt, einen ersten Cache-Speicher (720) und eine Binärdivisionsschaltung (730) umfasst, wobei die Barrett-Schaltung die genannte ganze Zahl sowie ein Ergebnis einer Vorausberechnung $\mu$ in Bezug auf einen Modulo-Wert q und eine Potenz von 2 ($2^{n+\alpha}$) empfängt, wobei das Ergebnis der Vorausberechnung direkt von dem ersten Cache-Speicher an die Barrett-Schaltung geliefert wird, wenn es bereits in Bezug auf den genannten Modulo-Wert abgespeichert ist, und ansonsten von der Binärdivisionsschaltung berechnet wird, bevor es im ersten Cache-Speicher abgespeichert und an die Barrett-Schaltung geliefert wird, wobei die Einrichtung zur modularen Reduktion einen zweiten Cache-Speicher (725) umfasst, der die ganze Zahl x und den Modulo *q* empfängt und einen Vorzeichenwert *b* liefert, der an einer Adresse in Bezug auf das Paar (*x,q*) abgespeichert ist, wobei dieser Vorzeichenwert an die Barrett-Schaltung geliefert wird, wobei der erste Cache-Speicher einen ersten Teil, Etikettenspeicher genannt, und einen zweiten Teil, Datenspeicher genannt, umfasst, wobei der erste und der zweite Teil mit *f(q)* adressiert sind, worin *f* eine Funktion der Projektion von *n* Bits auf *m* Bits mit *m* < n ist, wobei der erste Teil an der Adresse *f( q')* den Etikettenwert *q'* abspeichert, der zum Berechnen von *f(q')* gedient hat, und der zweite Teil an der gleichen Adresse *f(q')* das Ergebnis einer Vorausberechnung *μ(q')* abspeichert, wobei der zweite Cache-Speicher (725) einen zweiten Datenspeicher, jedoch keinen Etikettenspeicher, und einen Komparator (750) umfasst, um zu überprüfen, ob der Ausgang *r* der Barrett-Schaltung (710) die Bedingung $0 \leq r < q$ erfüllt, und um zu überprüfen, dass der so erhaltene Vorzeichenwert *b*, der im zweiten Datenspeicher an der Adresse *h(x, q)* in Bezug auf das Paar *(x, q)* abgespeichert ist, worin *h* eine Funktion der Projektion von 3n Bits auf *m* Bits mit *m* < 3n ist, invertiert wird, wenn die genannte Bedingung nicht erfüllt ist.

6. Einrichtung zur modularen Reduktion nach einem der Ansprüche 1 bis 5, **dadurch gekennzeichnet, dass** die Binärdivisionsschaltung (430, 630, 730) die Vorausberechnung $\mu = \left\lfloor \dfrac{2^{n+\alpha}}{q} \right\rfloor$ durchführt, worin $\left\lfloor \dfrac{2^{n+\alpha}}{q} \right\rfloor$ die größte ganze Zahl ist, die kleiner oder gleich $\dfrac{2^{n+\alpha}}{q}$ ist, worin $2^{n+\alpha}$ die genannte Potenz von 2 ist und $\alpha$ eine ganze Zahl ist, so dass $\alpha \geq n + 1$.

7. Einrichtung zur modularen Reduktion nach Anspruch 6, **dadurch gekennzeichnet, dass** die Barrett-Schaltung (410, 610, 710) das binäre Wort, das x darstellt, um a+β Bits zu den niedrigstwertigen Bits hin verschiebt (810), worin β eine ganze Zahl ist, so dass β ≥ -2 ist, dann das so verschobene Wort mit dem Ergebnis der Vorausberechnung μ multipliziert (820), dann das Ergebnis dieser Multiplikation erneut um α-β Bits zu den niedrigstwertigen Bits hin verschiebt (830), um ein zweites Wort zu erhalten, wobei der Vorzeichenwert vom zweiten Wort subtrahiert wird (835), bevor es mit dem Modulo multipliziert wird (840), und das Ergebnis dieser Multiplikation dann von der ganzen Zahl x subtrahiert wird (850), um den genannten Rest *r* zu erhalten.

**Claims**

1. Modular reduction device for calculating the remainder of an integer *x* divided by a modulo q, said integer being represented by a binary word of 2n bits and the modulo by a binary word of *n* bits, **characterised in that** it comprises a circuit implementing a generalised Barrett modular reduction algorithm, called a Barrett circuit (410), a cache memory (420) and a binary division circuit (430), the Barrett circuit receiving said integer and a result of a precalculation $\mu$ in relation to a value of the modulo q and a power of 2 ($2^{n+\alpha}$), the result of the precalculation being supplied directly by the cache memory to the Barrett circuit (220) if it is already stored in relation to said modulo value, and otherwise being calculated by the binary division circuit before being stored in the cache memory and supplied to the Barrett circuit, the cache memory (420) also receiving the integer x and supplying in addition to the result of the precalculation relative to a value of the modulo *q*, a sign value *b* associated with the pair (x,q*), this sign value being supplied to the Barret circuit, said cache memory comprising a first part called the tag memory (510), and a second part called the data memory (520), the first and second parts being addressed by *g (x, q)* in which *g* is a projection function of 3n bits onto *m* bits with *m < 3n*, the tag memory storing a tag value (*x', q'*) that was used to calculate *g(x',q')* at address *g(x',q')* and the data memory storing the result of a precalculation ( *μ(q')*) and the sign value (*b(x',q')*) associated with the tag (*x', q'*), at the same address *g(x',q')*.

2. Modular reduction device according to claim 1, **characterised in that** the result of the precalculation and the sign value are supplied directly by the cache memory (420) to the Barrett circuit (410) if the pair (*x,q*) is stored in the tag memory, and otherwise the result of the precalculation, *μ*, is obtained by the binary division circuit (430) from the value of the modulo, *q*, and the power of 2, the sign value, *b*, being obtained from the value of the modulo, *q*, the integer, *x*, and the precalculation result, the precalculation result and the sign value being stored in the data memory at the address to be calculated *g(x,q)* before being supplied to the Barrett circuit.

3. Modular reduction device for calculating the remainder of an integer *x* divided by a modulo q, said integer being represented by a binary word of 2n bits and the modulo by a binary word of *n* bits, **characterised in that** it comprises a circuit implementing a generalised Barrett modular reduction algorithm, called a Barrett circuit (610), a first cache memory (620) and a binary division circuit (630), the Barrett circuit receiving said integer and a result of a precal-

culation $\mu$ relative to a value of the modulo $q$ and a power of 2 ($2^{n+\alpha}$), the result of the precalculation being supplied directly by the first cache memory to the Barrett circuit if it is already stored in relation to said modulo value, and otherwise being calculated by the binary division circuit before being stored in the first cache memory and supplied to the Barrett circuit, the cache memory comprising a first part called the tag memory, and a second part called the data memory, the first and second parts being addressed by $f(q)$ in which f is a projection function of $n$ bits onto $m$ bits with $m < n$, the first part storing the tag value $q'$ that was used to calculate $f(q')$ at the address $f(q')$, and the second part storing the result of a precalculation $\mu(q')$ at the same address ($f(q')$), said modular reduction device comprising a second cache memory (625) receiving the integer x and the modulo q and supplying a sign value $b$ stored at an address in relation to the pair $(x,q)$, this sign value being supplied to the Barrett circuit, the second cache memory (625) comprising a second tag memory and a second data memory, these second tag and data memories both being addressed by $h(x,q)$ in which $h$ is a projection function of 3n bits onto $m$ bits in which $m < 3n$, the second tag memory storing a tag value $(x',q')$ that was used to calculate $h(x',q')$ at the address $h(x',q')$, and the second data memory storing said sign value ($b(x',q')$) associated with the tag $b(x',q')$, at the same address ($h(x',q')$).

4. Modular reduction device according to claim 3, **characterised in that** the sign value is supplied directly by the second cache memory (625) to the Barrett circuit (610) if the modulo value q is stored in the tag memory and the pair $(x,q)$ is stored in the second tag memory, and otherwise the sign value, $b$, is obtained from the modulo value, $q$ and the integer, $x$, the sign value then being supplied to the Barrett circuit.

5. Modular reduction device for calculating the remainder of an integer $x$ divided by a modulo q, said integer being represented by a binary word of 2n bits and the modulo by a binary word of $n$ bits, **characterised in that** it comprises a circuit implementing a generalised Barrett modular reduction algorithm, called a Barrett circuit (710), a first cache memory (720) and a binary division circuit (730), the Barrett circuit receiving said integer and a result of a precalculation $\mu$ relative to a value of the modulo $q$ and a power of 2 ($2^{n+\alpha}$), the result of the precalculation being supplied directly by the first cache memory to the Barrett circuit if it is already stored in relation to said modulo value, and otherwise being calculated by the binary division circuit before being stored in the first cache memory and supplied to the Barrett circuit, the modular reduction device comprising a second cache memory (725) receiving the integer x and the modulo q and supplying a sign value $b$ stored at an address in relation to the pair $(x,q)$, this sign value being supplied to the Barrett circuit, the first cache memory comprising a first part called the tag memory, and a second part called the data memory, the first and second parts being addressed by $f(q)$ in which f is a projection function of $n$ bits onto $m$ bits with $m<n$, the first part storing the tag value $q'$ that was used to calculate $f(q')$ at the address $f(q')$, and the second part storing the result of a precalculation $\mu(q')$ at the same address $f(q')$, the second cache memory (725) comprising a second data memory but does not comprise a tag memory, a comparator (750) to verify if the output $r$ from the Barrett circuit (710) satisfies the condition $0 \le r < q$ and that the sign value thus obtained $b$ stored in the second data memory at address $h(x,q)$ in relation to the pair $(x,q)$, in which $h$ is a projection function of 3n bits onto $m$ bits in which $m<3n$, is inverted if said condition is not satisfied.

6. Modular reduction device according to any one of claims 1 to 5, **characterised in that** the binary division circuit (430, 630, 730) performs the precalculation $\mu = \left\lfloor \dfrac{2^{n+\alpha}}{q} \right\rfloor$ in which $\left\lfloor \dfrac{2^{n+\alpha}}{q} \right\rfloor$ is the largest integer smaller than or

equal to $\dfrac{2^{n+\alpha}}{q}$ in which $2^{n+\alpha}$ is said power of 2 and $\alpha$ is an integer such that $\alpha \ge n +1$.

7. Modular reduction device according to claim 6, **characterised in that** the Barrett circuit (410, 610, 710) shifts (810) the binary word representing $x$ by $\alpha + \beta$ bits towards the least significant bits, in which $\beta$ is an integer such that $\beta \ge$ -2, then multiplies (820) the word thus shifted by the precalculation result, $\mu$, then shifts (830) the result of this multiplication again by $\alpha - \beta$ bits towards the least significant bits to obtain a second word, the sign value being subtracted (835) from the second word before it is multiplied (840) by the modulo, the result of this multiplication then being subtracted (850) from the integer $x$ to give said remainder, $r$ .

$x$

$110$   $>>(n+\beta)$

$120$   $\otimes$   $\mu$

$130$   $>>(\alpha-\beta)$

$140$   $\otimes$   $q$

$150$   $-$   $r'$

$160$   $-$   $q$

$170$   Xer   $r$

sgn

**Fig. 1**

**Fig. 2**

**Fig. 3**

EP 3 451 316 B1

**Fig. 4**

**Fig. 5**

**Fig. 6**

**Fig. 7**

**Fig. 8**

## RÉFÉRENCES CITÉES DANS LA DESCRIPTION

**Documents brevets cités dans la description**

- US 2007297601 A

- FR 2862454 A1

**Littérature non-brevet citée dans la description**

- **VINODH GOPAL et al.** Fast and Constant-Time Implemetation of Modular Exponentiation. *28th International Symposium on Reliable Distributed Systems,* 2009
- **MIROSLAV KNEZEVI et al.** *Speeding Up Barrett and Montgomery Modular Multiplications,* 2009

- **M. KNEZEVI.** *Speeding up Barrett and Montgomery modular multiplications,* 2009
- **J-P DESCHAMPS.** Hardware implémentation of finite-field arithmetic. McGraw-Hill, Inc, 2009